# EUROPÄISCHE PATENTSCHRIFT

(11) **EP 2 975 734 B1**
(45) Veröffentlichungstag und Bekanntmachung des Hinweises auf die Patenterteilung: **20.05.2020**
(21) Anmeldenummer: 15175317.5
(22) Anmeldetag: 03.07.2015
(51) Int. Cl.: H02K 3/24, H02K 1/20, H02K 9/19

(54) **ANORDNUNG ZUR STATORKÜHLUNG EINES ELEKTRISCHEN MOTORS**
ASSEMBLY FOR STATOR COOLING OF AN ELECTRIC MOTOR
SYSTEME DE REFROIDISSEMENT DE STATOR D'UN MOTEUR ELECTRIQUE

(30) Priorität: 07.07.2014 DE 102014213159
(43) Veröffentlichungstag der Anmeldung: 20.01.2016
(73) Patentinhaber: Deere & Company, Moline, IL 61265 (US)
(72) Erfinder: Gugel Dr., Rainer, 68723 Planckstadt (DE); Fritz Dr., Norbert, 68549 Ilvesheim (DE); Müller, David, 76297 Stutensee (DE)
(74) Vertreter: Dehnhardt, Florian Christopher

(56) Entgegenhaltungen:
- DE-A1- 19 743 430
- FR-A1- 2 840 122
- JP-A- 2005 012 989
- JP-A- 2011 055 645
- US-A1- 2012 080 982
- US-A1- 2013 140 924

## Beschreibung

Die Erfindung betrifft eine Anordnung zur Statorkühlung eines elektrischen Motors.

Eine derartige Anordnung zur Kühlung eines elektrischen Synchronmotors ist beispielsweise aus der US 2005/0012409 A1 bekannt. Die Anordnung umfasst eine Vielzahl von in zugehörigen Ausnehmungen eines Stators angeordnete stromdurchflossene Drahtwicklungen, wobei in jede der Ausnehmungen eine längs verlaufende und mit Kühlmittel beaufschlagte Kühlleitung eingebracht ist. Die jeweils zwischen den Drahtwicklungen und einem Luftspalt des Synchronmotors vorgesehenen Kühlleitungen bilden hierbei einen Hitzeschild zum Schutz des aus permanent magnetisiertem Material bestehenden Rotors. Die als separate Metallröhren ausgebildeten Kühlleitungen beanspruchen nicht nur zusätzlichen Bauraum, sondern erlauben aufgrund des vergleichsweise hohen thermischen Übergangswiderstands lediglich eine eingeschränkte Kühlung der angrenzenden Drahtwicklungen.

Weiter Anordnungen zur Kühlung eines elektrischen Motors sind aus den JP 2005012989, US 2013/0140924 A1 und US 2012/0080982 A1 bekannt. Aufgabe der vorliegenden Erfindung ist es daher, eine hinsichtlich ihrer Kühlleistung sowie ihres Bauraumbedarfs verbesserte Anordnung der eingangs genannten Art anzugeben.

Diese Aufgabe wird durch eine Anordnung zur Statorkühlung eines elektrischen Motors mit den Merkmalen des Patentanspruchs 1 gelöst.

Die erfindungsgemäße Anordnung umfasst ein Statorblechpaket mit einer Vielzahl axial aneinandergereihter Statorbleche sowie mehrere in dem Statorblechpaket axial verlaufende Wicklungsnuten zur Aufnahme zugehöriger Statorwicklungen. Erfindungsgemäß mündet in jede der Wicklungsnuten eine in einem der Statorbleche ausgebildete Radialausnehmung, wobei die Radialausnehmung zur Zuführung von Kühlflüssigkeit mit einer an dem Statorblechpaket vorgesehenen Kühlflüssigkeitsleitung kommuniziert.

Da die Statorwicklungen innerhalb der Wicklungsnuten unmittelbar mit Kühlflüssigkeit umspült werden, wird eine besonders effiziente und baulich kompakte Kühlung der stromdurchflossenen Statorwicklungen ermöglicht. Zugleich wird eine übermäßige Wärmeeinwirkung auf den aus permanent magnetisiertem Material bestehenden Rotor des elektrischen Motors verhindert.

Bei dem elektrischen Motor handelt es sich typischerweise um einen drehstrombetriebenen Synchronmotor, bei dem entlang eines Innenumfangs des Statorblechpakets eine Vielzahl gleichartiger Wicklungsnuten zur Aufnahme der aus Kupferlackdraht hergestellten Statorwicklungen eingebracht ist. Im Sinne einer bestmöglichen Umspülung der Statorwicklungen mit Kühlflüssigkeit mündet in jede der Wicklungsnuten mindestens eine mit einer jeweiligen Kühlflüssigkeitsleitung kommunizierende Radialausnehmung. Die Wicklungsnuten sind mittels zugehöriger Deckschieber in Richtung eines Luftspalts des elektrischen Motors abgedeckt, sodass ein unkontrollierter Austritt von Kühlflüssigkeit in Richtung des sich drehenden Rotors des elektrischen Motors verhindert wird.

Eine Verwendung der erfindungsgemäßen Anordnung bietet sich beispielsweise im Zusammenhang mit landwirtschaftlichen Nutzfahrzeugen an, da hier aufgrund der erforderlichen hohen Leistungsdichten elektrischer Antriebssysteme erhöhte Anforderungen an die Kühlung der insofern verwendeten elektrischen Motoren gestellt werden.

Vorteilhafte Ausführungen der erfindungsgemäßen Anordnung gehen aus den Unteransprüchen hervor.

Vorzugsweise ist die Radialausnehmung in dem Statorblech als einseitige nutförmige Vertiefung oder aber als schlitzförmiger Durchbruch ausgebildet. Die Verwendung einer einseitigen nutförmigen Vertiefung erlaubt es, mehrere Radialausnehmungen in ein und demselben Statorblech vorzusehen, wohingegen sich der schlitzförmige Durchbruch als Bestandteil eines preiswert herzustellenden Automatenstanzteils verwirklichen lässt. Um den schlitzförmigen Durchbruch zur Seite hin abzudecken, sind die unmittelbar angrenzenden Statorbleche im Statorblechpaket entweder ungeschlitzt ausgeführt oder aber verdreht zueinander angeordnet.

Zur Kühlung des Rotors des elektrischen Motors besteht die Möglichkeit, dass die Wicklungsnuten mittels zugehöriger Deckschieber gegenüber einem Luftspalt des elektrischen Motors derart teilabgedichtet sind, dass in den Wicklungsnuten geführte Kühlflüssigkeit in Richtung des Luftspalts und damit des an diesen angrenzenden Rotors kontrolliert austreten kann. Bei der Kühlflüssigkeit handelt es sich insbesondere um herkömmliches Hydrauliköl wie es beispielsweise in Getrieben landwirtschaftlicher Nutzfahrzeuge verwendet wird.

Auch ist es denkbar, dass die Statorbleche lose derart aneinandergereiht sind, dass in den Wicklungsnuten geführte Kühlflüssigkeit zwischen angrenzenden Statorblechen in Richtung eines Luftspalts des elektrischen Motors kontrolliert austreten kann. Die zwischen den Statorblechen hindurchtretende Kühlflüssigkeit ermöglicht nicht nur eine Kühlung des an den Luftspalt angrenzenden Rotors, sondern auch des Statorblechpakets selbst.

Sollte eine derartige Kühlung nicht erwünscht sein, so können die Statorbleche auch flüssigkeitsdicht miteinander verbunden sein. Dies kann beispielweise durch Vakuumtränken des gesamten Statorblechpakets mittels eines Backlacks oder dergleichen erfolgen.

Die Kühlflüssigkeitsleitung ist als in einer Außenseite des Statorblechpakets axial verlaufender nutförmiger Flüssigkeitskanal ausgebildet, wobei der nutförmige Flüssigkeitskanal mittels eines das Statorblechpaket umgebenden Motorgehäuses nach außen hin abgedichtet ist. Der nutförmige Flüssigkeitskanal dient zugleich der Kühlung des Statorblechpakets in Form einer Statorrückenkühlung sowie der Wärmeabgabe an das angrenzende und gegebenenfalls mit Kühlrippen versehene Motorgehäuse. Alternativ kann die Kühlflüssigkeitsleitung auch als innerhalb des Statorblechpakets axial verlaufende Durchgangsbohrung oder aber als radial entlang der Außenseite des Statorblechpakets umlaufender Ringkanal ausgebildet sein, in den ein in das Motorgehäuse eingebrachter Versorgungsanschluss zur Zuführung der Kühlflüssigkeit mündet.

Die Zuführung der Kühlflüssigkeit in den nutförmigen Flüssigkeitskanal bzw. die axial verlaufende Durchgangsbohrung erfolgt vorzugsweise an einer Stirnseite des Statorblechpakets. Zu diesem Zweck kann ein innerhalb des Motorgehäuses verlaufender Verteilerkanal vorgesehen sein, der stirnseitig an den nutförmigen Flüssigkeitskanal bzw. die axial verlaufende Durchgangsbohrung ankoppelt.

Vorzugsweise mündet die in dem Statorblech ausgebildete Radialausnehmung bezüglich der axialen Erstreckung des Rotorblechpakets im Wesentlichen mittig in die Wicklungsnut. Die an den beiden Stirnseiten des Statorblechpakets aus der Wicklungsnut austretende Kühlflüssigkeit kann in diesem Fall zum Zwecke der Kühlung der Wicklungsköpfe an den Enden der Statorwicklungen entsprechend weitergeleitet werden.

Des Weiteren ist es möglich, dass entlang einer Innenseite der Wicklungsnuten eine oder mehrere axial verlaufende Ein- und/oder Ausbuchtungen vorgesehen sind. Diese dienen innerhalb der Wicklungsnuten als Abstandshalter für eine die Statorwicklungen jeweils umgebende folienartige Nutisolation. Die Ein- und/oder Ausbuchtungen stellen auf diese Weise nicht nur einen ungehinderten Durchfluss der Kühlflüssigkeit innerhalb der Wicklungsnuten vorbei an der folienartigen Nutisolation sicher, sondern vergrößern zugleich deren kühlungswirksame Innenoberfläche, was zu einem weiter verringerten thermischen Übergangswiderstand zwischen Kühlflüssigkeit und Statorblechpaket führt.

Die erfindungsgemäße Anordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein Ausführungsbeispiel der erfindungsgemäßen Anordnung zur Statorkühlung eines im Längsschnitt dargestellten elektrischen Motors, und
- Fig. 2: das in Fig. 1 dargestellte Ausführungsbeispiel der erfindungsgemäßen Anordnung mit im Querschnitt dargestelltem elektrischen Motor.

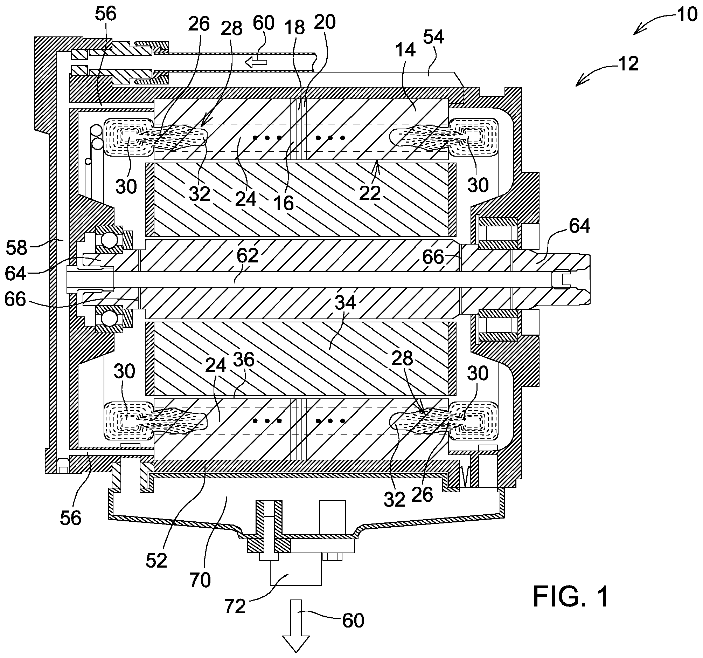

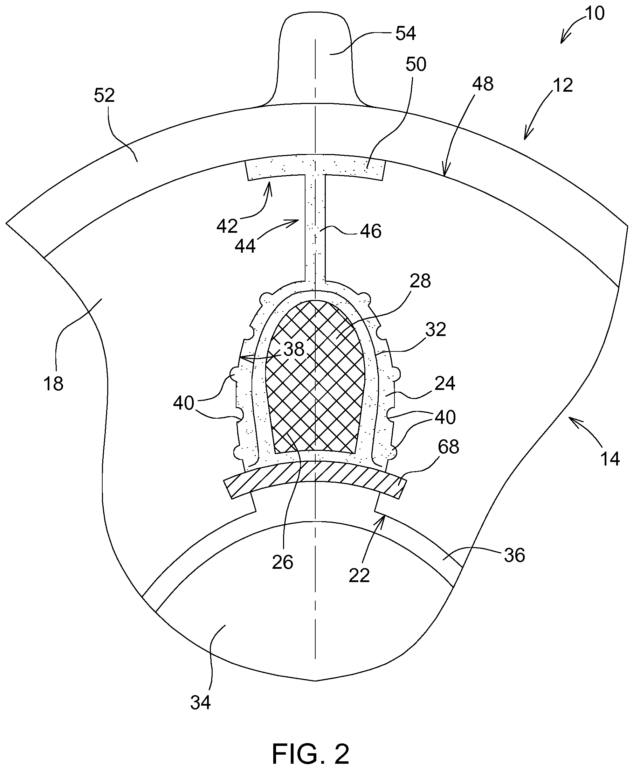

Fig. 1 zeigt ein Ausführungsbeispiel der erfindungsgemäßen Anordnung zur Statorkühlung eines im Längsschnitt dargestellten elektrischen Motors, wobei sich weitere Einzelheiten der erfindungsgemäßen Anordnung unter Bezugnahme auf die in Fig. 2 gezeigte Querschnittsdarstellung des elektrischen Motors ergeben.

Bei dem von der erfindungsgemäßen Anordnung 10 umfassten elektrischen Motor 12 handelt es sich beispielsgemäß um einen drehstrombetriebenen Synchronmotor. Der elektrische Motor 12 weist ein aus hochpermeablem Eisenmaterial bestehendes Statorblechpaket 14 auf. Das Statorblechpaket 14 besteht zur Verringerung unerwünschter Wirbelstromverluste aus einer Vielzahl axial aneinandergereihter Statorbleche 16, 18 und 20, von denen aus Gründen der Übersichtlichkeit in Fig. 1 lediglich drei wiedergegeben sind. Die als Automatenstanzteile hergestellten Statorbleche 16, 18 und 20 weisen jeweils eine Stärke von 0,5 bis 5 mm auf.

Entlang eines Innenumfangs 22 des Statorblechpakets 14 ist eine Vielzahl axial verlaufener Wicklungsnuten 24 vorgesehen. Jede der Wicklungsnuten 24 dient der Aufnahme einer aus Kupferlackdraht 26 hergestellten Statorwicklung 28. Die stirnseitig an dem Statorblechpaket 14 austretenden Statorwicklungen 28 bilden an ihren Enden zugehörige Wicklungsköpfe 30. Zur Vermeidung von Kurzschlüssen sind die Statorwicklungen 28 jeweils von einer folienartigen Nutisolation 32 umgeben. Bei der folienartigen Nutisolation 32 handelt es sich beispielsweise um eine Kaptonfolie.

Des Weiteren weist der elektrische Motor 12 einen innerhalb des Statorblechpakets 14 drehbar gelagerten zylindrischen Rotor 34 auf. Der aus permanent magnetisiertem Material bestehende Rotor 34 ist unter der Wirkung eines mittels der Statorwicklungen 28 erzeugbaren magnetischen Wechselfeldes in Drehung versetzbar. Statorblechpaket 14 und Rotor 34 sind durch einen Luftspalt 36 voneinander getrennt. Der Luftspalt 36 weist eine Abmessung von 0,3 bis 0,5 mm auf.

In Fig. 2 ist stellvertretend eine einzelne der im Übrigen gleichartig ausgebildeten Wicklungsnuten 24 dargestellt. Wie zu erkennen ist, umgibt die folienartige Nutisolation 32 die Statorwicklung 28 schlaufenförmig. Entlang einer Innenseite 38 der Wicklungsnut 24 sind mehrere axial verlaufende Ein- und/oder Ausbuchtungen 40 vorgesehen. Diese dienen innerhalb der Wicklungsnut 24 als Abstandshalter für die folienartige Nutisolation 32 sowie der Vergrößerung der kühlungswirksamen Innenoberfläche.

Zur Abführung der beim Betrieb des elektrischen Motors 12 entstehenden Verlustwärme in den stromdurchflossenen Statorwicklungen 28 mündet in jede der Wicklungsnuten 24 mindestens eine mit einer jeweiligen Kühlflüssigkeitsleitung 42 kommunizierende Radialausnehmung 44. Beispielsgemäß ist die Radialausnehmung 44 in dem Statorblech 18 als schlitzförmiger Durchbruch 46 ausgebildet. Um den schlitzförmigen Durchbruch 46 zur Seite hin abzudecken, sind die unmittelbar angrenzenden Statorbleche 16, 20 im Statorblechpaket 14 entweder ungeschlitzt ausgeführt oder aber verdreht zueinander angeordnet. Abweichend davon kann die Radialausnehmung 44 in dem Statorblech 18 auch als einseitige nutförmige Vertiefung ausgebildet sein.

Die Radialausnehmung 44 mündet bezüglich der axialen Erstreckung des Statorblechpakets 14 im Wesentlichen mittig in die Wicklungsnut 24. Die an den beiden Stirnseiten des Statorblechpakets 14 aus den Wicklungsnuten 24 austretende Kühlflüssigkeit wird zum Zwecke der Kühlung der Wicklungsköpfe 30 an den Enden der Statorwicklungen 28 entsprechend weitergeleitet.

Die Kühlflüssigkeitsleitung 42 ist im vorliegenden Fall als in einer Außenseite 48 des Statorblechpakets 14 axial verlaufender nutförmiger Flüssigkeitskanal 50 ausgebildet, wobei der nutförmige Flüssigkeitskanal 50 mittels eines das Statorblechpaket 14 umgebenden Motorgehäuses 52 nach außen hin abgedichtet ist. Der nutförmige Flüssigkeitskanal 50 dient zugleich der Kühlung des Statorblechpakets 14 in Form einer Statorrückenkühlung sowie der Wärmeabgabe an das angrenzende und mit Kühlrippen 54 versehene Motorgehäuse 52.

Die Zuführung der Kühlflüssigkeit in den nutförmigen Flüssigkeitskanal 50 erfolgt an einer der Stirnseiten des Statorblechpakets 14. Zu diesem Zweck ist ein innerhalb des Motorgehäuses 52 verlaufender Verteilerkanal 56 vorgesehen, der stirnseitig an den nutförmigen Flüssigkeitskanal 50 ankoppelt.

Ein Teil der dem Verteilerkanal 56 über eine zentrale Versorgungsleitung 58 zugeführten und aus einem durch Pfeile angedeuteten Kühlflüssigkeitskreislauf 60 entnommenen Kühlflüssigkeit wird durch eine zentrale Bohrung 62 innerhalb des Rotors 34 geleitet und gelangt von dort zu im Bereich zugehöriger Rotorflansche 64 ausgebildete Radialbohrungen 66, aus denen die Kühlflüssigkeit bei sich drehendem Rotor 34 in Richtung der Wicklungsköpfe 30 geschleudert wird, um diese zu kühlen.

Die Wicklungsnuten 24 sind mittels zugehöriger Deckschieber 68 in Richtung des Luftspalts 36 des elektrischen Motors 12 abgedeckt. Genauer gesagt sind die Wicklungsnuten 24 mittels der Deckschieber 68 gegenüber dem Luftspalt 36 des elektrischen Motors 12 derart teilabgedichtet, dass die in den Wicklungsnuten 24 geführte Kühlflüssigkeit in Richtung des Luftspalts 36 und damit des an diesen angrenzenden Rotors 34 zum Zwecke seiner Kühlung kontrolliert austreten kann. Die Deckschieber 68 bestehen aus wärmebeständigem Kunststoff, insbesondere aus Pertinax oder dergleichen.

Gemäß einer optionalen Ausgestaltung sind die Statorbleche des Statorblechpakets 14 lose derart aneinandergereiht, dass die in den Wicklungsnuten 24 geführte Kühlflüssigkeit zwischen angrenzenden Statorblechen in Richtung des Luftspalts 36 des elektrischen Motors 12 kontrolliert austreten kann. Die zwischen den Statorblechen hindurchtretende Kühlflüssigkeit ermöglicht nicht nur eine Kühlung des an den Luftspalt 36 angrenzenden Rotors 34, sondern auch des Statorblechpakets 14 selbst.

Sollte eine derartige Kühlung nicht erwünscht sein, so sind die Statorbleche flüssigkeitsdicht miteinander verbunden. Dies erfolgt durch Vakuumtränken des gesamten Statorblechpakets 14 mittels eines Backlacks oder dergleichen. Zur Gewährleistung bzw. Wiederherstellung der Durchgängigkeit der kühlflüssigkeitsführenden Passagen innerhalb des Statorblechpakets 14, im vorliegenden Fall also der darin ausgebildeten Kühlflüssigkeitsleitungen 42, Radialausnehmungen 44 und Wicklungsnuten 24, ist nach dem Vakuumtränken gegebenenfalls eine entsprechende Nachbearbeitung des Statorblechpakets 14 erforderlich.

Die aus dem Luftspalt 36 bzw. von den Wicklungsköpfen 30 abfließende Kühlflüssigkeit wird in einer Bodenwanne 70 des Motorgehäuses 52 gesammelt und danach über eine Ablaufleitung 72 in den mit dem elektrischen Motor 12 verbundenen Kühlflüssigkeitskreislauf 60 zurückgeführt. Bei der Kühlflüssigkeit handelt es sich um herkömmliches Hydrauliköl wie es beispielsweise in Getrieben landwirtschaftlicher Nutzfahrzeuge verwendet wird.

## Patentansprüche

1. Anordnung zur Statorkühlung eines elektrischen Motors, mit einem Statorblechpaket (14), umfassend eine Vielzahl axial aneinandergereihter Statorbleche (16, 18, 20) sowie mehrere in dem Statorblechpaket (14) axial verlaufende Wicklungsnuten (24) zur Aufnahme zugehöriger Statorwicklungen (28), wobei in jede der Wicklungsnuten (24) eine in einem der Statorbleche (18) ausgebildete Radialausnehmung (44) mündet, wobei die Radialausnehmung (44) zur Zuführung von Kühlflüssigkeit mit einer an dem Statorblechpaket (14) vorgesehenen Kühlflüssigkeitsleitung (42) kommuniziert, **dadurch gekennzeichnet, dass** die Kühlflüssigkeitsleitung (42) als in einer Außenseite (48) des Statorblechpakets (14) axial verlaufender nutförmiger Flüssigkeitskanal (50) ausgebildet ist, wobei der nutförmige Flüssigkeitskanal (50) mittels eines das Statorblechpaket (14) umgebenden Motorgehäuses (52) nach außen hin abgedichtet ist.

2. Anordnung nach Anspruch 1, **dadurch gekennzeichnet, dass** die Radialausnehmung (44) in dem Statorblech (18) als einseitige nutförmige Vertiefung oder aber als schlitzförmiger Durchbruch (46) ausgebildet ist.

3. Anordnung nach Anspruch 1 oder 2, **dadurch gekennzeichnet, dass** die Wicklungsnuten (24) mittels zugehöriger Deckschieber (68) gegenüber einem Luftspalt (36) des elektrischen Motors (12) derart teilabgedichtet sind, dass in den Wicklungsnuten (24) geführte Kühlflüssigkeit in Richtung des Luftspalts (36) kontrolliert austreten kann.

4. Anordnung nach einem der Ansprüche 1 bis 3, **dadurch gekennzeichnet, dass** die Statorbleche (16, 18, 20) lose derart aneinandergereiht sind, dass in den Wicklungsnuten (24) geführte Kühlflüssigkeit zwischen angrenzenden Statorblechen (16, 18, 20) in Richtung eines Luftspalts (36) des elektrischen Motors (12) kontrolliert austreten kann.

5. Anordnung nach einem der Ansprüche 1 bis 3, **dadurch gekennzeichnet, dass** die Statorbleche (16, 18, 20) flüssigkeitsdicht miteinander verbunden sind.

6. Anordnung nach einem der Ansprüche 1 bis 5, **dadurch gekennzeichnet, dass** die Zuführung der Kühlflüssigkeit in den nutförmigen Flüssigkeitskanal (50) an einer Stirnseite des Statorblechpakets (14) erfolgt.

7. Anordnung nach einem der Ansprüche 1 bis 6, **dadurch gekennzeichnet, dass** die in dem Statorblech (18) ausgebildete Radialausnehmung (44) bezüglich der axialen Erstreckung des Statorblechpakets (14) im Wesentlichen mittig in die Wicklungsnut (24) mündet.

8. Anordnung nach einem der Ansprüche 1 bis 7, **dadurch gekennzeichnet, dass** entlang einer Innenseite (38) der Wicklungsnuten (24) eine oder mehrere axial verlaufende Ein- und/oder Ausbuchtungen (40) vorgesehen sind.

## Claims

1. Assembly for cooling the stator of an electric motor, having a laminated stator core (14), comprising a multiplicity of stator laminations (16, 18, 20) which are in mutual axial succession, as well as a plurality of winding grooves (24) which for receiving associated stator windings (28) run axially in the laminated stator core (14), wherein a radial clearance (44) configured in one of the stator laminations (18) opens into each of the winding grooves (24), wherein the radial clearance (44) for supplying cooling liquid communicates with a cooling liquid line (42) which is provided on the laminated stator core (14), **characterized in that** the cooling liquid line (42) is configured as a groove-shaped liquid duct (50) which runs axially in an external side (48) of the laminated stator core (14), wherein the groove-shaped liquid duct (50) is externally sealed by means of a motor housing (52) which surrounds the laminated stator core (14).

2. Assembly according to Claim 1, **characterized in that** the radial clearance (44) in the stator lamination (18) is configured as a one-sided groove-shaped depression, or else as a slot-shaped breakout (46).

3. Assembly according to Claim 1 or 2, **characterized in that** the winding grooves (24) by means of associated sliding covers (68) are partially sealed in relation to an air gap (36) of the electric motor (12) in such a manner that cooling liquid which is guided in the winding grooves (24) can exit in a controlled manner in the direction of the air gap (36) .

4. Assembly according to one of Claims 1 to 3, **characterized in that** the stator laminations (16, 18, 20) are in loose mutual succession in such a manner that cooling liquid guided in the winding grooves (24) can exit in a controlled manner in the direction of an air gap (36) of the electric motor (12) between adjacent stator laminations (16, 18, 20) .

5. Assembly according to one of Claims 1 to 3, **characterized in that** the stator laminations (16, 18, 20) are connected to one another in a fluid-tight manner.

6. Assembly according to one of claims 1 to 5, **characterized in that** the supply of the cooling liquid into the groove-shaped liquid duct (50) takes place at a face side of the laminated stator core (14) .

7. Assembly according to one of Claims 1 to 6, **characterized in that** the radial clearance (44) configured in the stator lamination (18) in terms of the axial extent of the laminated stator core (14) opens in a substantially centric manner into the winding groove (24).

8. Assembly according to one of Claims 1 to 7, **characterized in that** one or a plurality of axially running concavities and/or convexities (40) are provided along an internal side (38) of the winding grooves (24).

## Revendications

1. Système de refroidissement de stator d'un moteur électrique, comprenant un empilement de tôles statoriques (14) comprenant une pluralité de tôles statoriques alignées axialement les unes contre les autres (16, 18, 20), ainsi que plusieurs rainures d'enroulement (24) s'étendant axialement dans l'empilement de tôles statoriques (14) pour recevoir des enroulements statoriques associés (28), un évidement radial (44) réalisé dans l'une des tôles statoriques (18) débouchant dans chacune des rainures d'enroulement (24), l'évidement radial (44), pour la fourniture de liquide de refroidissement, communiquant avec une conduite de liquide de refroidissement (42) prévue au niveau de l'empilement de tôles statoriques (14), **caractérisé en ce que** la conduite de liquide de refroidissement (42) est réalisée sous forme de canal de liquide en forme de rainure (50) s'étendant axialement dans un côté extérieur (48) de l'empilement de tôles statoriques (14), le canal de liquide en forme de rainure (50) étant étanchéifié vers l'extérieur au moyen d'un carter moteur (52) entourant l'empilement de tôles statoriques (14).

2. Système selon la revendication 1, **caractérisé en ce que** l'évidement radial (44) dans la tôle statorique (18) est réalisé sous forme de renfoncement en forme de rainure unilatérale ou sous forme de perçage en forme de fente (46).

3. Système selon la revendication 1 ou 2, **caractérisé en ce que** les rainures d'enroulement (24) sont en partie étanchéifiées au moyen de tiroirs de recouvrement associés (68) par rapport à un entrefer (36) du moteur électrique (12) de telle sorte que le liquide de refroidissement guidé dans les rainures d'enroulement (24) puisse sortir de manière contrôlée dans la direction de l'entrefer (36) .

4. Système selon l'une quelconque des revendications 1 à 3, **caractérisé en ce que** les tôles statoriques (16, 18, 20) sont alignées de manière lâche les unes contre les autres de telle sorte que le liquide de refroidissement guidé dans les rainures d'enroulement (24) puisse sortir de manière contrôlée entre les tôles statoriques (16, 18, 20) adjacentes dans la direction d'un entrefer (36) du moteur électrique (12).

5. Système selon l'une quelconque des revendications 1 à 3, **caractérisé en ce que** les tôles statoriques (16, 18, 20) sont connectées les unes aux autres de manière étanche aux liquides.

6. Système selon l'une quelconque des revendications 1 à 5, **caractérisé en ce que** l'alimentation du canal de liquide en forme de rainure (50) en liquide de refroidissement s'effectue au niveau d'un côté frontal de l'empilement de tôles statoriques (14).

7. Système selon l'une quelconque des revendications 1 à 6, **caractérisé en ce que** l'évidement radial (44) réalisé dans la tôle statorique (18) débouche essentiellement centralement dans la rainure d'enroulement (24) par rapport à l'étendue axiale de l'empilement de tôles statoriques (14).

8. Système selon l'une quelconque des revendications 1 à 7, **caractérisé en ce qu'**un ou plusieurs renfoncements ou bombements s'étendant axialement (40) sont prévus le long d'un côté intérieur (38) des rainures d'enroulement (24).
